# EUROPÄISCHE PATENTSCHRIFT

(11) **EP 2 989 305 B1**
(45) Veröffentlichungstag und Bekanntmachung des Hinweises auf die Patenterteilung: **14.06.2017**
(21) Anmeldenummer: 14719271.0
(22) Anmeldetag: 16.04.2014
(51) Int. Cl.: F01N 3/20, F01N 9/00

(54) **VERFAHREN ZUM BETRIEB EINER VORRICHTUNG ZUR DOSIERTEN BEREITSTELLUNG EINER FLÜSSIGKEIT**
METHOD FOR OPERATING A DEVICE FOR THE DOSED SUPPLY OF A LIQUID
PROCÉDÉ PERMETTANT DE FAIRE FONCTIONNER UN DISPOSITIF DESTINÉ À LA DÉLIVRANCE DOSÉE D'UN LIQUIDE

(30) Priorität: 26.04.2013 DE 102013104245
(43) Veröffentlichungstag der Anmeldung: 02.03.2016
(73) Patentinhaber: Continental Automotive GmbH, 30165 Hannover (DE)
(72) Erfinder: BRÜCK, Rolf, 51429 Bergisch Gladbach (DE); HODGSON, Jan, 53840 Troisdorf (DE)
(86) Internationale Anmeldenummer: PCT/EP2014/057840
(87) Internationale Veröffentlichungsnummer: WO 2014/173789

(56) Entgegenhaltungen:
- WO-A1-2011/162696
- DE-A1-102011 016 967
- FR-A1- 2 966 872
- GB-A- 2 031 520

## Beschreibung

Die Erfindung betrifft ein Verfahren zum Betrieb einer Vorrichtung zur dosierten Bereitstellung einer Flüssigkeit. Eine solche Vorrichtung kann auch als Fördervorrichtung und/oder als Dosiervorrichtung bezeichnet werden. Eine solche Vorrichtung kann beispielsweise in einem Kraftfahrzeug eingesetzt werden, um einer Abgasbehandlungsvorrichtung des Kraftfahrzeugs ein flüssiges Additiv zur Abgasreinigung zuzuführen. In Abgasbehandlungsvorrichtungen, die zum Betrieb ein flüssiges Additiv benötigen, wird beispielsweise das Verfahren der selektiven katalytischen Reduktion (SCR-Verfahren; SCR = Selective Catalytic Reduction) durchgeführt. Bei diesem Verfahren werden Stickstoffoxidverbindungen im Abgas einer Verbrennungskraftmaschine unter Zuhilfenahme eines Reduktionsmittels reduziert. Als Reduktionsmittel wird üblicherweise Ammoniak verwendet. Ammoniak wird in Kraftfahrzeugen normalerweise nicht direkt bevorratet, sondern in Form einer Reduktionsmittelvorläuferlösung, die als Flüssigkeit in einem Tank gespeichert und mit einer entsprechenden Vorrichtung bereitgestellt wird, die gemäß dem hier beschriebenen Verfahren betrieben werden kann. Eine Flüssigkeit, die in diesem Zusammenhang besonders häufig zum Einsatz kommt, ist Harnstoff-Wasser-Lösung, die für den Zweck der Abgasreinigung mit einem Harnstoffgehalt von 32,5 % unter dem Handelsnamen AdBlue® erhältlich ist.

Für die erfolgreiche Abgasreinigung ist eine möglichst genau dosierte Zugabe der Flüssigkeit zu einer Abgasbehandlungsvorrichtung gewünscht, dass heißt, dass die Menge der zugegebenen Flüssigkeit einem Bedarf in der Abgasbehandlungsvorrichtung möglichst genau entspricht. Darüber hinaus sollte eine Vorrichtung zur dosierten Bereitstellung einer Flüssigkeit möglichst kostengünstig herstellbar und betreibbar sein und möglichst nicht durch gefrierende Flüssigkeit innerhalb der Vorrichtung beschädigt werden können, weil die beschriebenen (wässrigen) Flüssigkeiten bei niedrigen Temperaturen einfrieren können. Niedrige Temperaturen treten in Kraftfahrzeugen beispielsweise während längerer Stillstandphasen auf.

Zur Förderung derartiger Flüssigkeiten haben sich Vorrichtungen als besonders vorteilhaft herausgestellt, die eine verzweigungsfreie Förderleitung von einem Tank zu einem Injektor an einer Abgasbehandlungsvorrichtung aufweisen. Derartige Vorrichtungen zur Bereitstellung haben typischerweise keine Rücklaufleitung, welche eine Kreisförderung von Flüssigkeit durch die Vorrichtung und zurück in den Tank ermöglicht. Eine solche Rücklaufleitung wurde vorgesehen, weil hierüber Luftblasen in der Vorrichtung leicht und sicher entfernt werden konnten. Jedoch stellt eine solche Rücklaufleitung einen erhöhten Kostenaufwand dar und ist zur Entfernung von Luftblasen nicht mehr erforderlich.

Die Dosierung der Flüssigkeit mit Hilfe der Vorrichtung erfolgt vorzugsweise mit Hilfe eines Injektors (Dosierventils), welcher elektronisch angesteuert geöffnet und geschlossen werden kann. Die von der Vorrichtung abgegebene Menge an Flüssigkeit ist dabei typischerweise proportional zur Öffnungszeit des Injektors. Dafür muss der an dem Injektor anliegende Druck der Flüssigkeit möglichst genau einer Vorgabe entsprechen, weil die von einem Injektor während einer vorgegebenen Öffnungszeit dosierte Menge an Flüssigkeit eine starke Abhängigkeit von dem Druck der Flüssigkeit an dem Injektor aufweist.

Zwischen mehreren einzelnen Dosiervorgängen des Injektors ist es wünschenswert, dass der Druck der Flüssigkeit in einen Druckleitungsabschnitt zwischen einer Pumpe und dem Injektor im Wesentlichen konstant gehalten wird, damit der Injektor unmittelbar dann, wenn eine Dosieranforderung an den Injektor gestellt wird, Flüssigkeit wie gewünscht dosieren kann.

Vorrichtungen zur Bereitstellung einer Flüssigkeit weisen zur Förderung der Flüssigkeit und zur Aufrechterhaltung des Drucks an dem Injektor typischerweise mindestens eine Pumpe (siehe hierzu z. B. DE102011016967). Die für derartige Vorrichtungen üblicherweise verwendeten Pumpen haben allerdings den Nachteil, dass durch die Pumpe hindurch eine Rückströmung an Flüssigkeit auftreten kann. Durch diese Rückströmung wird der Druck an dem Injektor verfälscht und somit die Dosiergenauigkeit verringert.

Hiervon ausgehend ist es Aufgabe der hier vorliegenden Erfindung, die im Zusammenhang mit dem Stand der Technik geschilderten technischen Probleme zu lösen bzw. zumindest zu lindern. Es soll insbesondere ein besonders vorteilhaftes Verfahren zum Betrieb einer Vorrichtung zur dosierten Bereitstellung einer Flüssigkeit offenbart werden, mit welchem eine besonders hohe Dosiergenauigkeit der Bereitstellung der Flüssigkeit erreicht werden kann.

Diese Aufgaben werden gelöst mit einem Verfahren gemäß den Merkmalen des Patentanspruchs 1. Weitere vorteilhafte Ausgestaltungen des Verfahrens sind in den abhängigen Patentansprüchen angegeben. Die in den Patentansprüchen einzeln aufgeführten Merkmale sind in beliebiger, technologisch sinnvoller Weise miteinander kombinierbar und können durch erläuternde Sachverhalte aus der Beschreibung ergänzt werden, wobei weitere Ausführungsvarianten der Erfindung aufgezeigt werden.

Demnach wird ein Verfahren zum Betrieb einer Vorrichtung zur dosierten Bereitstellung einer Flüssigkeit vorgeschlagen, zumindest aufweisend mindestens eine Pumpe zur Förderung der Flüssigkeit, wobei die mindestens eine Pumpe ein Pumpengehäuse mit mindestens einem Einlass und mindestens einem Auslass aufweist, wobei an dem Pumpengehäuse ein Exzenter relativ zu dem Pumpengehäuse drehbar angeordnet ist, wobei sich zwischen dem Exzenter und dem Pumpengehäuse eine verformbare Membran befindet, die zusammen mit dem Pumpengehäuse einen Förderweg von dem mindestens einen Einlass zu dem mindestens einen Auslass begrenzt und mindestens eine Abdichtung des Förderwegs ausbildet ist, wobei die mindestens eine Abdichtung durch eine Bewegung des Exzenters zur Förderung entlang des Förderwegs verschiebbar ist und die Pumpe einen elektrischen Antrieb zur Bewegung des Exzenters hat. Das Verfahren umfasst zumindest die folgenden Schritte:
a) Feststellen einer angeforderten Dosiermenge an Flüssigkeit;
b) Aktivieren des elektrischen Antriebs der mindestens einen Pumpe, um die mindestens eine Abdichtung zur Förderung der Flüssigkeit mit einer Förderrichtung von dem Einlass zu dem Auslass zu bewegen, indem eine Betriebsspannung an dem elektrischen Antrieb angelegt wird;
c) Festlegen eines Betriebsstopps der mindestens einen Pumpe, wenn die geförderte Menge Flüssigkeit der angeforderten Dosiermenge entspricht;
d) Stoppen der Bewegung des Exzenters;
e) Aufrechterhalten einer Haltespannung an dem elektrischen Antrieb, wobei mit Hilfe der Haltespannung ein Haltemoment auf den Exzenter ausgeübt und eine Bewegung des Exzenters entgegen der Förderrichtung verhindert wird.

Die Vorrichtung weist vorzugsweise eine Saugleitung auf, die sich ausgehend von der mindestens einen Pumpe hin zu einem Tank erstreckt, in welchem die Flüssigkeit gespeichert ist. Die Saugleitung ist vorzugsweise an den Einlass der Pumpe angeschlossen. Vorzugsweise hat die Vorrichtung darüber hinaus eine Druckleitung, die sich ausgehend von der Pumpe hin zu einer Zugabestelle zur Zugabe der Flüssigkeit zu einer Abgasbehandlungsvorrichtung erstreckt. Diese Druckleitung ist an den Auslass der Pumpe angeschlossen. Grundsätzlich ist auch möglich, dass mehrere (parallele) Saugleitungen zu mehreren Pumpen (beispielsweise unterschiedlicher Förderleistung) führen, die jeweils (insbesondere verzweigungsfrei) über Druckleitungen mit einem einzelnen Injektor oder mehreren Injektoren verbunden sind. Bevorzugt sind weitere Verzweigungen des Leitungssystems der Vorrichtung nicht vorgesehen. Insbesondere existiert vorzugsweise keine Rücklaufleitung, die eine Verbindung des Auslasses der Pumpe zurück zu dem Tank herstellt.

Eine Pumpe mit dem beschriebenen Aufbau kann als Orbitalpumpe bezeichnet werden. Der Förderweg wird von einem Spalt zwischen der verformbaren Membran und dem Pumpengehäuse gebildet. Die verformbare Membran ist vorzugsweise zwischen dem Exzenter und dem Pumpengehäuse derart angeordnet, dass die verformbare Membran im Bereich der mindestens einen Abdichtung zwischen dem Gehäuse und dem Exzenter gequetscht ist. Der Spalt zwischen der verformbaren Membran und dem Pumpengehäuse wird dadurch im Bereich der mindestens einen Abdichtung fluiddicht verschlossen. Der Spalt bzw. der Förderweg ist während des Betriebs der Vorrichtung mit der Flüssigkeit gefüllt. Entlang des Förderwegs teilt die mindestens eine Abdichtung den Förderweg auf, so dass mindestens ein (geschlossenes) Fördervolumen gebildet ist. Durch die Verschiebung der Abdichtung durch eine Bewegung des Exzenters wird dieses Fördervolumen mit einer Förderrichtung ausgehend von dem Einlass der Pumpe hin zu dem Auslass der Pumpe verschoben. Dadurch findet eine Förderung der Flüssigkeit statt.

Das Pumpengehäuse der Pumpe ist vorzugsweise ein Ring oder eine zylindrische Kammer, in welcher der Exzenter innen (zentrisch) angeordnet ist. Das Pumpengehäuse kann dann als (äußerer) Stator der Pumpe angesehen werden, während der Exzenter als (innerer) Rotor bezeichnet werden kann. Gemäß einer weiteren Ausführungsform der beschriebenen Pumpe ist es allerdings auch möglich, dass das Pumpengehäuse einen inneren Stator der Pumpe bildet, welcher von dem Exzenter umgeben ist. Dann bildet der Exzenter einen äußeren Rotor. Der Einlass und der Auslass sind an dem Pumpengehäuse angeordnet und ermöglichen das Einströmen und das Ausströmen der Flüssigkeit in das Pumpengehäuse bzw. in den Förderweg zwischen der verformbaren Membran und dem Pumpengehäuse.

An der Pumpe ist vorzugsweise auch eine Trennung vorgesehen, die eine nicht gewollte Rückströmung der Flüssigkeit von dem Auslass zu dem Einlass verhindert. Diese Trennung kann beispielsweise als Eindellung in dem Pumpengehäuse oder als Aufdickung der verformbaren Membran ausgebildet sein. Diese Trennung ist (ortsfest bzw. permanent) zwischen dem Auslass und dem Einlass der Pumpe angeordnet. Die Trennung verhindert, dass durch die Bewegung des Exzenters relativ zu dem Pumpengehäuse zu irgendeinem Zeitpunkt eine direkte Verbindung für die Flüssigkeit von dem Auslass zu dem Einlass gebildet wird. Die Trennung kann auch dadurch gewährleistet sein, dass die verformbare Membran zwischen dem Auslass und dem Einlass an dem Gehäuse verspannt, verschraubt oder verklebt ist.

Der Exzenter ist vorzugsweise mehrteilig ausgeführt. Der Exzenter weist vorzugsweise einen (inneren) Exzenterbereich, welcher eine exzentrische Drehbewegung ausführt, und einen (äußeren) Lagerring, welcher den Exzenterbereich umgibt, auf. Zwischen dem Exzenterbereich und dem Lagerring befindet sich vorzugsweise mindestens ein Lager. Dieses Lager kann ein Kugellager oder ein Rollenlager sein. Der Exzenterbereich des Exzenters führt im Betrieb eine Drehbewegung um eine Rotationsachse aus. Durch eine äußere Form des Exzenters ergibt sich eine exzentrische Bewegung einer Oberfläche des Exzenterbereiches. Diese exzentrische Bewegung wird auf den Lagerring übertragen. Durch das Lager zwischen Exzenterbereich und Lagerring wird verhindert, dass die Drehbewegung von dem Exzenterbereich zusammen mit der exzentrischen Bewegung auf den Lagerring übertragen wird. Durch die Kombination eines Exzenterbereiches und eines Lagerrings mit dazwischen angeordnetem Lager kann eine exzentrische Drehbewegung des Exzenterbereiches in eine exzentrische Taumelbewegung des Lagerrings ohne Drehbewegungsanteil umgewandelt werden. Die Tatsache, dass die Bewegung des Lagerrings keinen Drehbewegungsanteil aufweist, ermöglicht es, Schubspannungen in der verformbaren Membran zu reduzieren. Vorzugsweise wird die verformbare Membran von dem Exzenter nur gewalkt. An einer Kontaktfläche des Exzenters zu der verformbaren Membran wirken vorzugsweise nur Druckkräfte und im wesentlichen keine Reibungskräfte, die durch Reibung des Exzenters an der Membran auftreten würden, wenn die Kontaktfläche zu der verformbaren Membran auch einen Drehbewegungsanteil aufweisen würde. Eine entsprechende Aufteilung des Exzenters in Exzenterbereich und Lagerring ist auch möglich, wenn der Exzenter ein äußerer Rotor ist, der um ein Gehäuse herum angeordnet ist, welches einen inneren Stator bildet.

Der elektrische Antrieb ist über eine Achse (Welle) mit dem Exzenter der Pumpe verbunden, damit der elektrische Antrieb den Exzenter der Pumpe antreiben kann. Der elektrische Antrieb umfasst typischerweise einen Elektromotor mit mindestens einer Antriebsspule, die ein magnetisches Feld erzeugt, wenn diese von einem Strom durchflossen wird. Durch dieses elektrische Feld wird dann ein Rotor des elektrischen Antriebs bewegt.

Das Verfahren ist demnach insbesondere auf die hier erläuterten Orbitalpumpen abgestimmt bzw. für deren Betrieb geeignet. Dies wird nun im Folgenden im Detail weiter ausgeführt.

Die Feststellung einer angeforderten Dosiermenge in Schritt a) kann beispielsweise durch ein Steuergerät erfolgen, welches den Betrieb der Vorrichtung bzw. der Abgasbehandlungsvorrichtung überwacht. Eine angeforderte Dosiermenge an Flüssigkeit kann festgestellt werden, wenn in einer Abgasbehandlungsvorrichtung eines Kraftfahrzeugs eine passende Menge Flüssigkeit zur Abgasreinigung benötigt wird, wobei die Vorrichtung zur Zugabe von Flüssigkeit (z.B. der Injektor) an die Abgasbehandlungsvorrichtung angeschlossen ist. Die Feststellung kann beispielsweise auf Basis von aktuellen Messwerten der Verbrennungskraftmaschine und/oder der Abgasbehandlungsvorrichtung und/oder vorher ermittelten (und in dem Steuergerät gespeicherten bzw. angepassten) Kennwerten/Kennlinien erfolgen. Die Dosiermenge kann dabei direkt vorgegeben/festgelegt werden oder aber auch als ein dafür eindeutiger bzw. charakteristischer Regelungsparameter (z.B. Öffnungszeit des Injektors).

Durch die Aktivierung des elektrischen Antriebs der Pumpe in Schritt b) wird der elektrische Antrieb der Pumpe in Bewegung gesetzt, um den Exzenter und die mindestens eine Abdichtung zur Förderung der Flüssigkeit zu bewegen. Wenn eine Betriebsspannung an den elektrischen Antrieb angelegt wird, fließt üblicherweise auch ein Strom, welcher ein magnetisches Feld in einer Antriebsspule des Antriebs erzeugt, wobei das magnetische Feld den Rotor des elektrischen Antriebs in Bewegung versetzt. Sobald der elektrische Antrieb aktiviert ist, wird die geförderte Menge an Flüssigkeit bevorzugt überwacht. Dies kann beispielsweise durch eine Überwachung der Bewegung des Exzenters bzw. der Bewegung des an den Exzenter angeschlossenen elektrischen Antriebs geschehen. Die geförderte Menge an Flüssigkeit ist üblicherweise proportional zu der Bewegung des Exzenters bzw. zur Bewegung des elektrischen Antriebs. Es ist auch möglich, dass die bereitgestellte Menge an Flüssigkeit mit einer Durchflussmessung ermittelt wird. Eine Durchflussmessung kann beispielsweise an einem Injektor zur Zugabe der Flüssigkeit zu einer Abgasbehandlungsvorrichtung erfolgen. Eine Durchflussmessung kann beispielsweise durch eine Erkennung der Öffnungszeit des Injektors und des an dem Injektor anliegenden Druckes der Flüssigkeit sowie eine Berechnung der Durchflussmenge aus diesen Angaben erfolgen.

Sobald die geförderte Menge an Flüssigkeit der gemäß Schritt a) angeforderten Dosiermenge entspricht, wird ein Betriebsstopp der Pumpe festgelegt (Schritt c)). Dies kann auch in einem Steuergerät geschehen. Die Bewegung des Exzenters wird dann (unmittelbar bzw. sofort) in Schritt d) gestoppt, indem der elektrische Antrieb der Pumpe gestoppt wird. Damit wird jedenfalls erreicht, dass der Exzenter ruht bzw. sich nicht weiter in Förderrichtung bewegt.

Gemäß Schritt e) wird eine Haltespannung an dem elektrischen Antrieb aufrechterhalten. Es ist auch möglich, dass die Antriebsspannung des Antriebs zunächst vollständig deaktiviert wird und dann in Schritt e) eine (reduzierte) Haltespannung bereitgestellt wird. Die Haltespannung ist so gering, dass sich der Exzenter nicht mehr bewegt, jedoch in seiner aktuell vorliegenden Position verharrt und insbesondere nicht entgegen der Förderrichtung zurück bewegt wird. Dabei ist vorgesehen, dass die Haltespannung einen Wert annimmt, der größer als Null ("0") und kleiner als die Betriebsspannung ist. Die Haltespannung ist insbesondere so ausgelegt, dass diese den Exzenter gerade auch gegen einen anliegenden Druck der Flüssigkeit festhält bzw. blockiert.

Die Flüssigkeit in dem Förderweg wirkt aufgrund ihres Drucks Kräfte auf den Exzenter bzw. auf die verformbare Membran aus. Je nach Ausrichtung des Exzenters können diese Kräfte mit einer radialen Richtung und/oder mit einer tangentialen Richtung wirken. Dabei sind radiale Kräfte hin zur Rotationsachse des Exzenters ausgerichtet, während tangentiale Kräfte tangential zur Rotationsachse des Exzenters verlaufen. Tangentiale Kräfte bewirken ein Druckmoment auf den Exzenter. Durch die (reduzierte) Haltespannung kann ein Haltemoment auf den Exzenter ausgeübt werden, welches dem Druckmoment entgegenwirkt und so eine Bewegung des Exzenters verhindert. Hierdurch kann der Druck innerhalb der Druckleitung von dem Auslass der Pumpe zu dem Injektor aufrechterhalten werden.

Die Möglichkeit, die Position des Exzenters festzulegen, indem an den elektrischen Antrieb eine Haltespannung angelegt wird, hat den Vorteil, dass keine mechanischen Maßnahmen zum Halten des Exzenters in einer gewünschten Position notwendig sind. Das Halten des Exzenters in einer gewünschten Position kann allein mit Hilfe von elektronischen Maßnahmen erreicht werden.

Das Verfahren ist besonders vorteilhaft, wenn während Schritt e) zumindest ein Reibungsmoment wirkt, welches das Haltemoment unterstützt.

Das Reibungsmoment wirkt besonders bevorzugt an mindestens einer der folgenden Stellen:
- zwischen der verformbaren Membran und dem Pumpengehäuse;
- zwischen der verformbaren Membran und dem Exzenter;
- innerhalb eines Lagers des Exzenters; und
- innerhalb des elektrischen Antriebs.

Die Pumpe kann beispielsweise so ausgeführt sein, dass im Betrieb zwischen der verformbaren Membran und dem Pumpengehäuse und/oder zwischen der verformbaren Membran und dem Exzenter ein Reibkontakt vorliegt, der während Schritt e) ein definiertes Reibungsmoment bewirkt. Das Reibungsmoment kann auch innerhalb eines Lagers des Exzenters und/oder innerhalb eines elektrischen Antriebs erzeugt werden. Das Reibungsmoment ist vorzugsweise durch die Konstruktion der Pumpe vorgegeben und für den Fachmann leicht feststellbar.

Das zusätzliche Reibungsmoment des Haltemoments verursacht eine gewisse Ungenauigkeit der erforderlichen Größe des Haltemoments. Das Haltemoment muss nicht exakt dem Druckmoment entsprechen, damit während Schritt e) eine Bewegung des Exzenters verhindert wird. Gewisse Ungenauigkeiten im Haltemoment können durch das Reibungsmoment ausgeglichen werden. Dies ermöglicht es eine Elektronik zur Erzeugung des Haltemoments einfacher auszulegen. Gleichzeitig ist die Kombination eines Reibungsmoments und eines elektrischen Haltemoments zur Festlegung der Position des Exzenters vorteilhaft, weil das Reibungsmoment relativ gering sein kann. Durch das elektrische Haltemoment wird die zum Halten des Exzenters in der Position notwendige Kraft aufgebracht, während das Reibungsmoment lediglich zur Kompensation von Ungenauigkeiten und Toleranzen in dieser Kraft im Vergleich zu der wirkenden Druckraft dient.

Weiterhin ist das Verfahren vorteilhaft, wenn die Haltespannung so gewählt ist, dass das Haltemoment zwischen einem maximalen Drehmoment und einem minimalen Drehmoment liegt, welches von der Flüssigkeit aufgrund eines Druckunterschieds zwischen dem mindestens einen Auslass und dem mindestens einen Einlass auf den Exzenter ausgeübt werden kann.

Vorzugsweise entspricht das Haltemoment genau dem mittleren Drehmoment aus maximalem Drehmoment und minimalem Drehmoment. Vorzugsweise wirken zusätzlich zu dem elektrischen Haltemoment Reibungsmomente, welche jeweils die Unterschiede zu dem maximalen Drehmoment und dem minimalen Drehmoment ausgleichen können. So kann ein besonders vorteilhaftes Verhältnis aus wirkenden Reibungsmomenten innerhalb der Pumpe und der notwendigen Genauigkeit bzw. Toleranz des Haltemoments erreicht werden.

Weiterhin ist die Vorrichtung vorteilhaft, wenn der elektrische Antrieb der Pumpe eine Leistungsaufnahme von weniger als 15 W [Watt] hat, wenn die Haltespannung an dem elektrischen Antrieb anliegt. Vorzugsweise ist die Leistungsaufnahme sogar kleiner als 10 W oder sogar kleiner als 5 W. Die Leistungsaufnahme während Schritt e) ist eine Verlustleistung, die vollständig in Wärme umgesetzt wird. Eine Verlustleistung von weniger als 15 W ist jedoch bei einer Vorrichtung zur Bereitstellung einer Flüssigkeit für die Abgasreinigung akzeptabel.

Weiterhin ist vorteilhaft, wenn die Haltespannung mit Hilfe einer Pulsweitenmodulation erzeugt wird.

Eine Pulsweitenmodulation ist eine besonders effiziente Möglichkeit, die Spannung für einen elektrischen Antrieb einer Pumpe zu reduzieren. Eine Pulsweitenmodulation ermöglicht insbesondere auch eine individuelle Anpassung der Haltespannung, so dass die Haltespannung beispielsweise für bestimmte einzelne Pumpen, um eine Kompensation von Fertigungstoleranzen zu erreichen. Dazu müssen entsprechende Parameter in einem Steuergerät, welche die Erzeugung der Haltespannung mittels Pulsweitenmodulation steuern, entsprechend angepasst werden.

Weiterhin ist das Verfahren vorteilhaft, wenn die Position des Exzenters relativ zu dem Pumpengehäuse vor Schritt e) erkannt und anhand der Position ein maximal mögliches Drehmoment ermittelt wird, welches von der Flüssigkeit auf den Exzenter ausgeübt werden kann, und die Haltespannung in Abhängigkeit dieses maximal möglichen Drehmoment festgelegt wird.

Das Drehmoment, welches die Flüssigkeit auf den Exzenter ausübt, kann unterschiedlich sein, je nachdem in welcher Position der Exzenter relativ zu dem Pumpengehäuse angeordnet ist. Dies hängt beispielsweise damit zusammen, dass die Querschnittsflächen des Exzenters bzw. des Förderkanals zwischen der verformbaren Membran und dem Pumpengehäuse unterschiedlich sind, je nachdem in welcher Position sich der Exzenter befindet. Insbesondere können die Bereiche des Exzenter bzw. der verformbaren Membran unterschiedlich groß sein, die mit dem Auslass der Pumpe bzw. dem Einlass der Pumpe in fluidischer Verbindung stehen. Der Druck, der an dem Einlass der Pumpe in dem Förderweg wirkt, ist regelmäßig kleiner als der Druck, der an dem Auslass der Pumpe in dem Förderweg wirkt. So können sich durch unterschiedliche Positionen des Exzenters relativ zu dem Gehäuse unterschiedliche resultierende Druckmomente ergeben. Hier wird nun vorgeschlagen, dass die Haltespannung (und damit das Haltemoment) individuell an die tatsächlich bzw. aktuell wirkenden Druckmomente angepasst wird. Hierdurch wird eine besonders geringe Haltespannung ermöglicht. Insbesondere können auch Positionen des Exzenters auftreten, bei denen keine Haltespannung notwendig ist, weil die von der Flüssigkeit auf den Exzenter ausgeübten Drehmomente im Gleichgewicht sind. Die Adaption der elektrischen Haltespannung an die wirkenden Druckmomente kann durch Pulsweitenmodulation ebenfalls in effektiver Weise erreicht werden. Mit anderen Worten wird vorgeschlagen, dass die Haltespannung in Schritt e) bei einer mehrmaligen Durchführung des Verfahrens variiert wird, insbesondere in Abhängigkeit der auf den Exzenter wirkenden Druckkräfte in und/oder entgegen der Förderrichtung.

Weiter wird ein Kraftfahrzeug vorgeschlagen, zumindest aufweisend eine Verbrennungskraftmaschine, eine Abgasbehandlungsvorrichtung zur Reinigung der Abgase der Verbrennungskraftmaschine und eine Vorrichtung zur Förderung einer Flüssigkeit zu der Abgasbehandlungsvorrichtung, wobei die Vorrichtung dazu eingerichtet ist, gemäß dem beschriebenen Verfahren betrieben zu werden und wobei die Flüssigkeit Harnstoff-Wasser-Lösung ist.

In der Abgasbehandlungsvorrichtung ist vorzugsweise ein SCR-Katalysator angeordnet, mit welchem das Verfahren der selektiven katalytischen Reduktion durchgeführt werden kann, um Stickstoffoxidverbindungen im Abgas der Verbrennungskraftmaschine zu reduzieren. Dazu wird die mit der Vorrichtung zugeführte Flüssigkeit verwendet. Die Vorrichtung kann sämtliche hier im Zusammenhang mit dem Verfahren beschriebenen Vorrichtungsmerkmale aufweisen. Das Kraftfahrzeug weist bevorzugt auch ein (ggf. separates - also von der Motorsteuerung getrenntes -) Steuergerät auf, welches mit der Vorrichtung bzw. zumindest mit der mindestens einen Pumpe und dem mindestens einen Injektor der Vorrichtung in Verbindung steht, und in welchem die Routinen, Kennwerte, etc. zur Durchführung des beschriebenen Verfahrens hinterlegt sein können.

Die Erfindung sowie das technische Umfeld werden nachfolgend anhand der Figuren näher erläutert. Die Figuren zeigen besondere Ausführungsbeispiele, auf welche die Erfindung jedoch nicht begrenzt ist. Insbesondere ist darauf hinzuweisen, dass die Figuren und vor allem die in den Figuren dargestellten Größenverhältnisse nur schematisch sind. Es zeigen:
- Fig. 1:: eine erste Ausführungsvariante einer Pumpe für eine Vorrichtung,
- Fig. 2:: eine Vorrichtung für das beschriebene Verfahren,
- Fig. 3:: eine zweite Ausführungsvariante einer Pumpe für eine Vorrichtung,
- Fig. 4:: eine dritte Ausführungsvariante einer Pumpe für eine Vorrichtung,
- Fig. 5:: ein Kraftfahrzeug aufweisend eine Vorrichtung, die nach dem beschriebenen Verfahren betrieben werden kann,
- Fig. 6:: eine schematische Darstellung einer Pulsweitenmodulation,
- Fig. 7:: eine schematische Darstellung einer Pumpe in einer Querschnittsrichtung.

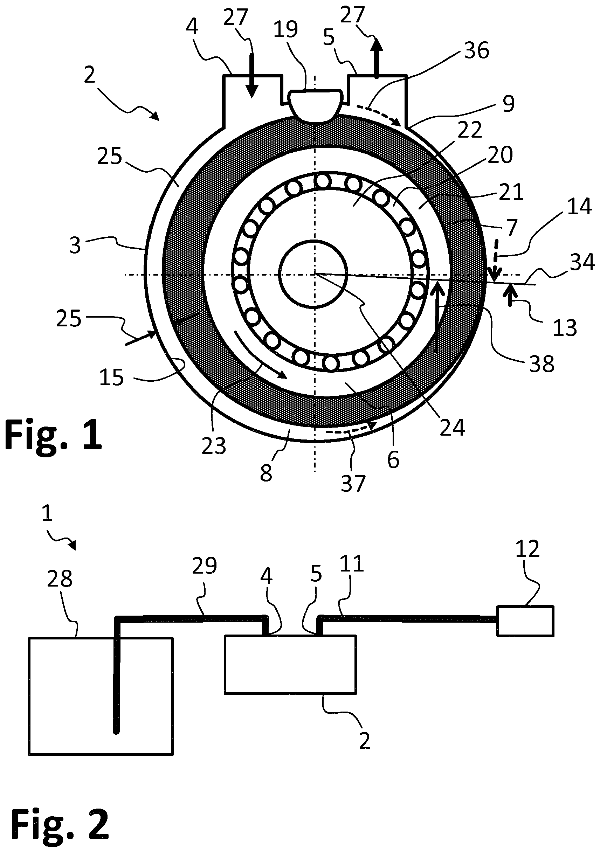

In Fig. 1 ist eine Pumpe 2 dargestellt, welche ein Pumpengehäuse 3 mit einem Einlass 4 und einem Auslass 5 aufweist. Innerhalb des Pumpengehäuses 3 ist ein Exzenter 6 angeordnet. Zwischen dem Exzenter 6 und dem Pumpengehäuse 3 befindet sich die verformbare Membran 7. Zwischen der verformbaren Membran 7 und dem Pumpengehäuse 3 existiert ein Förderweg 8, der von dem Einlass 4 zu dem Auslass 5 verläuft. Der Förderweg 8 ist an einer Stelle durch eine Abdichtung 9 abgedichtet (verschlossen). An der Abdichtung 9 liegt die verformbare Membran 7 direkt an dem Gehäuse 3 an. Durch eine exzentrische Bewegung des Exzenters 6 kann die Abdichtung 9 verschoben werden. Dadurch geschieht eine Förderung der Flüssigkeit mit einer Förderrichtung 27 von dem Einlass 4 zu dem Auslass 5. Der Exzenter 6 ist in einen inneren Exzenterbereich 22 und in einen äußeren Lagerring 21 aufgeteilt. Der innere Exzenterbereich 22 ist von dem äußeren Lagerring 21 durch ein Lager 20 getrennt. Wenn der Exzenterbereich 22 mit einer der Förderrichtung 27 entsprechenden Drehrichtung 23 um die Achse 24 gedreht wird, vollführt der Lagerring 21 die beschriebene exzentrische Bewegung. Zwischen dem Einlass 4 und dem Auslass 5 ist eine (ortsfeste, permanente) Trennung 19 vorgesehen, die hier als Nocke ausgeführt ist, welche die verformbare Membran 7 lokal zusammendrückt. Diese Trennung 19 verhindert eine Rückströmung der Flüssigkeit von dem Auslass 5 zurück zu dem Einlass 4.

In Fig. 1 ist auch ein Querschnitt 25 des Förderwegs 8 zwischen der verformbaren Membran 7 und dem Pumpengehäuse 3 zu erkennen. Je nachdem, wie groß dieser Querschnitt 25 in dem jeweiligen Bereich des Förderwegs 8 ist, stellen sich unterschiedliche Auslassdruckkräfte 36 und Einlassdruckkräfte 37 auf den Exzenter 6 ein. Die Einlassdruckkraft 37 und die Auslassdruckkraft 36 resultieren in dem Druckmoment 14, welches von dem Haltemoment 38 (wenigstens) ausgeglichen wird.

Zusätzlich kann innerhalb der Pumpe 2 auch noch ein Reibungsmoment 13 wirken, welches Ungenauigkeiten in dem Haltemoment 38 ausgleicht. Je nachdem, ob das Haltemoment 38 oder das Druckmoment 14 größer ist, kann das Reibungsmoment 13 in unterschiedlicher Richtung wirken.

Fig. 2 zeigt eine Vorrichtung 1, aufweisend eine Pumpe 2, die Flüssigkeit aus einem Tank 28 über eine (einzige) Saugleitung 29 ansaugt. Die Saugleitung 29 ist an einem (einzigen) Einlass 4 der (einzigen) Pumpe 2 angebunden. An einen (einzigen) Auslass 5 der Pumpe 2 ist eine (einzige, verzweigungsfreie) Druckleitung 11 angebunden, die zu einem (einzigen) Injektor 12 zur Zugabe der Flüssigkeit zu einer Abgasbehandlungsvorrichtung führt.

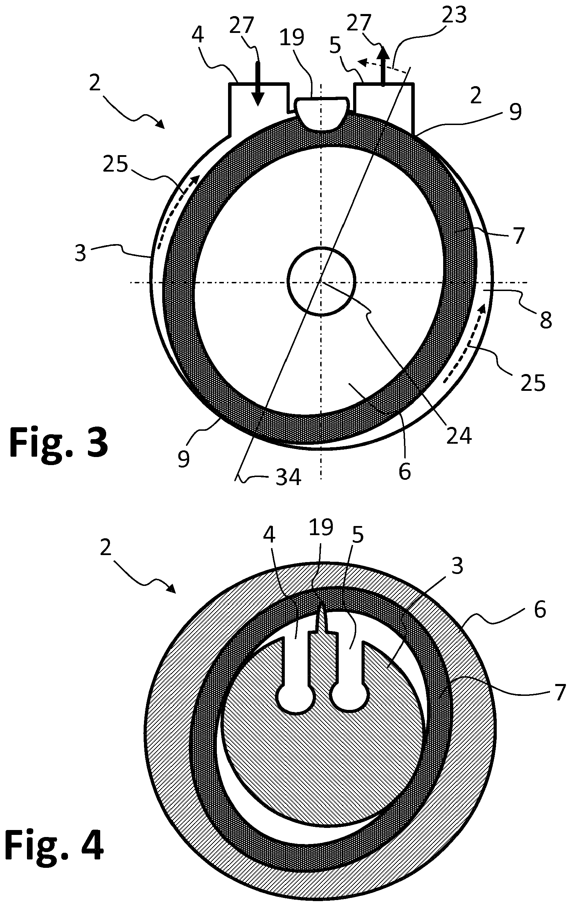

Fig. 3 zeigt eine zweite Ausführungsvariante einer Pumpe 2 für eine beschriebene Vorrichtung, die sich von der in Fig. 1 dargestellten Pumpe dadurch unterscheidet, dass der Exzenter 6 und die verformbare Membran 7 zwei Abdichtungen 9 ausbilden, welche durch eine Rotationsbewegung des Exzenters 6 relativ zu dem Pumpengehäuse 3 entlang des Förderwegs 8 bewegt werden. Bei dieser Pumpe 2 ist allerdings keine Aufteilung des Exzenters 6 in einen Lagerring und einen Exzenterbereich gegeben.

Fig. 4 zeigt sehr schematisch eine weitere Ausführungsvariante einer Pumpe 2, bei welcher das Pumpengehäuse 3 innen und der Exzenter 6 außen um das Pumpengehäuse 3 herum angeordnet ist. Auch hier befindet sich die verformbare Membran 7 zwischen dem Pumpengehäuse 3 und dem Exzenter 6. Der Einlass 4 und der Auslass 5 sind an dem Pumpengehäuse 3 angeordnet und es existiert eine Trennung 19 zur Verhinderung einer Rückströmung der Flüssigkeit von dem Auslass 5 zu dem Einlass 4.

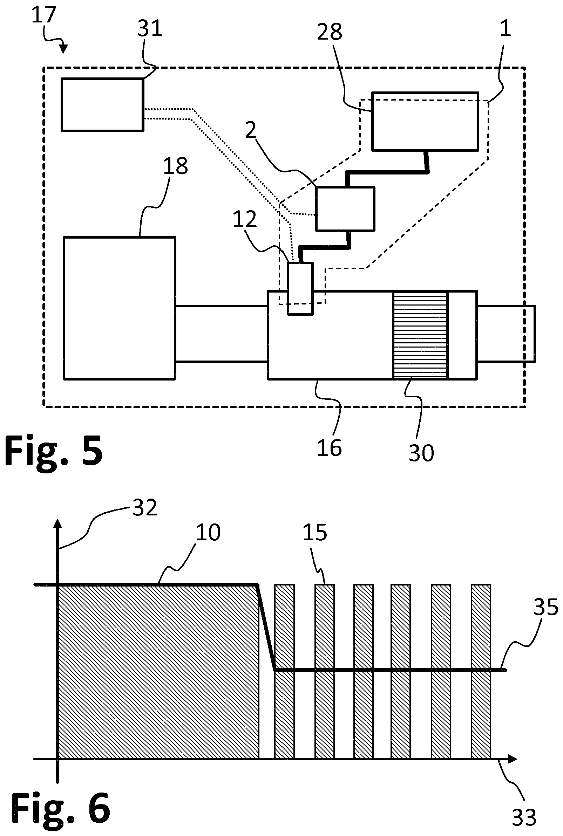

Fig. 5 zeigt ein Kraftfahrzeug 17, aufweisend eine Verbrennungskraftmaschine 18 und eine Abgasbehandlungsvorrichtung 16 zur Reinigung der Abgase der Verbrennungskraftmaschine 18, in welcher ein SCR-Katalysator 30 angeordnet ist. Die Abgasbehandlungsvorrichtung 16 kann von einem Injektor 12 mit Flüssigkeit versorgt werden. Der Injektor 12 ist Bestandteil einer Vorrichtung 1, die die Flüssigkeit aus einem Tank 28 entnimmt und mit einer Pumpe 2 zu dem Injektor 12 fördert. Zumindest die Pumpe 2 und der Injektor 12 sind an ein Steuergerät 31 angeschlossen, mit dem die Durchführung des beschriebenen Verfahrens erfolgen kann. Das Verfahren kann in dem Steuergerät 31 als Routine implementiert sein.

In Fig. 6 ist schematisch die Funktionsweise einer Pulsweitenmodulation 15 zur Bereitstellung einer Haltespannung 35 dargestellt. In dem Diagramm ist die Betriebsspannung 10 der Pumpe über die Zeitachse 33 auf der Spannungsachse 32 aufgetragen. Im vorderen Bereich liegt eine Betriebsspannung 10 an, die zur Bewegung des elektrischen Antriebs und des Exzenters erforderlich ist. Im hinteren Bereich des Diagramms erfolgt eine Pulsweitenmodulation 15, mit welcher die Betriebsspannung 10 auf die Haltespannung 35 reduziert wird. Durch eine geeignete Wahl der Pulslängen der Pulsweitenmodulation 15 kann die Größe der Haltespannung 35 eingestellt werden.

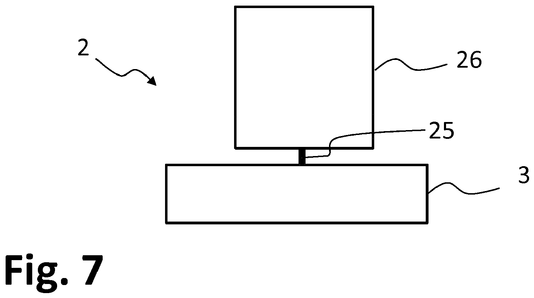

In Fig. 7 ist eine Pumpe 2 stark vereinfacht dargestellt. Hier ist zu erkennen, dass die Pumpe das Pumpengehäuse 3 aufweist, in welchem der Exzenter (hier nicht dargestellt) angeordnet ist. Der Exzenter ist über die Achse 24 (Welle) mit dem Antrieb 26 der Pumpe 2 verbunden.

Vorsorglich sei noch darauf hingewiesen, dass die in den Figuren gezeigten Kombinationen von technischen Merkmalen nicht generell zwingend sind. So können technische Merkmale einer Figur mit anderen technischen Merkmalen einer weiteren Figur und/oder der allgemeinen Beschreibung kombiniert werden. Etwas anderes soll nur gelten, wenn hier explizit die Kombination von Merkmalen ausgewiesen wurde und/oder der Fachmann erkennt, dass sonst die Grundfunktionen der Vorrichtung nicht mehr erfüllt werden können.

Durch das beschriebene Verfahren wird es ermöglicht, eine besonders kostengünstige Pumpe zur dosierten Bereitstellung einer Flüssigkeit zu verwenden, ohne dass besondere konstruktive Maßnahmen an der Pumpe notwendig sind und gleichzeitig eine sehr hohe Dosiergenauigkeit auch bei sehr kleinen Mengen von Flüssigkeit mit der Pumpe möglich ist.

### Bezugszeichenliste

- 1: Vorrichtung
- 2: Pumpe
- 3: Pumpengehäuse
- 4: Einlass
- 5: Auslass
- 6: Exzenter
- 7: Membran
- 8: Förderweg
- 9: Abdichtung
- 10: Betriebsspannung
- 11: Druckleitung
- 12: Injektor
- 13: Reibungsmoment
- 14: Druckmoment
- 15: Pulsweitenmodulation
- 16: Abgasbehandlungsvorrichtung
- 17: Kraftfahrzeug
- 18: Verbrennungskraftmaschine
- 19: Trennung
- 20: Lager
- 21: Lagerring
- 22: Exzenterbereich
- 23: Drehrichtung
- 24: Achse
- 25: Querschnitt
- 26: Antrieb
- 27: Förderrichtung
- 28: Tank
- 29: Saugleitung
- 30: SCR-Katalysator
- 31: Steuergerät
- 32: Spannungsachse
- 33: Zeitachse
- 34: Position
- 35: Haltespannung
- 36: Auslassdruckkraft
- 37: Einlassdruckkraft
- 38: Haltemoment

## Patentansprüche

1. Verfahren zum Betrieb einer Vorrichtung (1) zur dosierten Bereitstellung einer Flüssigkeit zumindest aufweisend mindestens eine Pumpe (2) zur Förderung der Flüssigkeit, wobei die mindestens eine Pumpe (2) ein Pumpengehäuse (3) mit mindestens einem Einlass (4) und mindestens einem Auslass (5) aufweist, wobei an dem Pumpengehäuse (3) ein Exzenter (6) relativ zu dem Pumpengehäuse (3) drehbar angeordnet ist, wobei sich zwischen dem Exzenter (6) und dem Pumpengehäuse (3) eine verformbare Membran (7) befindet, die zusammen mit dem Pumpengehäuse (3) einen Förderweg (8) von dem mindestens einen Einlass (4) zu dem mindestens einen Auslass (5) begrenzt und mindestens eine Abdichtung (9) des Förderwegs (8) ausbildet, wobei die mindestens eine Abdichtung (9) durch eine Bewegung des Exzenters (6) zur Förderung entlang des Förderwegs (8) verschiebbar ist und die Pumpe (2) einen elektrischen Antrieb (26) zur Bewegung des Exzenters (6) hat, wobei das Verfahren zumindest die folgenden Schritte umfasst:
a) Feststellen eine angeforderten Dosiermenge an Flüssigkeit;
b) Aktivieren des elektrischen Antriebs (26) der mindestens einen Pumpe (2), um die mindestens eine Abdichtung (9) zur Förderung der Flüssigkeit mit einer Förderrichtung (27) von dem Einlass (4) zu dem Auslass (5) zu bewegen, indem eine Betriebsspannung (10) an dem elektrischen Antrieb (26) angelegt wird;
c) Festlegen eines Betriebsstopps der mindestens einen Pumpe (2), wenn die geförderte Menge Flüssigkeit der angeforderten Dosiermenge entspricht;
d) Stoppen der Bewegung des Exzenters (6);
e) Aufrechterhalten einer Haltespannung (35) an dem elektrischen Antrieb (26), wobei mit Hilfe der Haltespannung (25) ein Haltemoment (38) auf den Exzenter (6) ausgeübt und eine Bewegung des Exzenters (6) entgegen der Förderrichtung (27) verhindert wird.

2. Verfahren nach einem der Patentanspruch 1, wobei während Schritt e) ein Reibungsmoment (13) wirkt, das das Haltemoment (38) unterstützt.

3. Verfahren nach einem der vorhergehenden Patentansprüche, wobei die Haltespannung (35) so gewählt ist, dass das Haltemoment (38) zwischen einem maximalen Drehmoment und einem minimalen Drehmoment liegt, welches von der Flüssigkeit aufgrund eines Druckunterschiedes zwischen dem mindestens einen Auslass (5) und dem mindestens einen Einlass (4) auf den Exzenter (6) ausgeübt werden kann.

4. Verfahren nach einem der vorhergehenden Patentansprüche, wobei der elektrische Antrieb (26) der Pumpe (2) eine Leistungsaufnahme von weniger als 15 Watt hat, wenn die Haltespannung (35) an dem elektrischen Antrieb (26) anliegt.

5. Verfahren nach einem der vorhergehenden Patentansprüche, wobei die Haltespannung (35) mit Hilfe einer Pulsweitenmodulation (15) erzeugt wird.

6. Verfahren nach einem der vorhergehenden Patentansprüche, wobei die Position (34) des Exzenters (6) relativ zu dem Pumpengehäuse (3) vor Schritt e) erkannt und anhand der Position (34) ein maximal mögliches Drehmoment ermittelt wird, welches von der Flüssigkeit auf den Exzenter (6) ausgeübt werden kann, und die Haltespannung (35) in Abhängigkeit dieses maximal möglichen Drehmoment festgelegt wird.

7. Kraftfahrzeug (17), zumindest aufweisend eine Verbrennungskraftmaschine (18), eine Abgasbehandlungsvorrichtung (16) zur Reinigung der Abgase der Verbrennungskraftmaschine (18) und eine Vorrichtung (1) zur Förderung einer Flüssigkeit zu der Abgasbehandlungsvorrichtung (18), wobei die Vorrichtung (1) dazu eingerichtet ist, gemäß einem Verfahren nach einem der vorhergehenden Patentansprüche betrieben zu werden, wobei die Flüssigkeit Harnstoff-Wasser-Lösung ist.

## Claims

1. Method for operating a device (1) for the dosed supply of a liquid, at least having at least one pump (2) for delivering the liquid, wherein the at least one pump (2) has a pump housing (3) with at least one inlet (4) and at least one outlet (5), wherein an eccentric (6) is arranged on the pump housing (3) so as to be rotatable relative to the pump housing (3), wherein a deformable diaphragm (7) is situated between the eccentric (6) and the pump housing (3), which diaphragm, together with the pump housing (3), delimits a delivery path (8) from the at least one inlet (4) to the at least one outlet (5) and forms at least one seal (9) of the delivery path (8), wherein the at least one seal (9) is displaceable along the delivery path (8) by way of a movement of the eccentric (6) for delivery purposes, and the pump (2) has an electric drive (26) for moving the eccentric (6), wherein the method comprises at least the following steps:
a) detecting a demanded dose amount of liquid;
b) activating the electric drive (26) of the at least one pump (2), in order to move the at least one seal (9) in a delivery direction (27) from the inlet (4) to the outlet (5) for the purposes of delivering the liquid, through the application of an operating voltage (10) to the electric drive (26);
c) scheduling a stoppage of operation of the at least one pump (2) when the delivered amount of liquid corresponds to the demanded dose amount;
d) stopping the movement of the eccentric (6);
e) maintaining a holding voltage (35) at the electric drive (26), wherein, by means of the holding voltage (25), a holding torque (38) is exerted on the eccentric (6) and a movement of the eccentric (6) counter to the delivery direction (27) is prevented.

2. Method according to Patent Claim 1, wherein, during step e), a friction torque (13) acts which assists the holding torque (38).

3. Method according to one of the preceding patent claims, wherein the holding voltage (35) is selected such that the holding torque (38) lies between a maximum torque and a minimum torque which can be exerted on the eccentric (6) by the liquid owing to a pressure difference between the at least one outlet (5) and the at least one inlet (4).

4. Method according to one of the preceding patent claims, wherein the electric drive (26) of the pump (2) has a power consumption of less than 15 watts when the holding voltage (35) is applied to the electric drive (26).

5. Method according to one of the preceding patent claims, wherein the holding voltage (35) is generated by way of pulse width modulation (15).

6. Method according to one of the preceding patent claims, wherein the position (34) of the eccentric (6) relative to the pump housing (3) is detected before step e), and a maximum possible torque which can be exerted on the eccentric (6) by the liquid is determined on the basis of the position (34), and the holding voltage (35) is set in a manner dependent on said maximum possible torque.

7. Motor vehicle (17), at least having an internal combustion engine (18), an exhaust-gas treatment device (16) for the purification of the exhaust gases of the internal combustion engine (18), and a device (1) for delivering a liquid to the exhaust-gas treatment device (18), wherein the device (1) is designed to be operated in accordance with a method according to one of the preceding patent claims, wherein the liquid is urea-water solution.

## Revendications

1. Procédé permettant de faire fonctionner un dispositif (1) destiné à la délivrance dosée d'un liquide, présentant au moins une pompe (2) permettant de refouler le liquide, la pompe (2) au moins au nombre de un présentant un carter de pompe (3) pourvu d'au moins une entrée (4) et d'au moins une sortie (5), un excentrique (6) étant disposé sur le carter de pompe (3) de façon à pouvoir tourner par rapport au carter de pompe (3), une membrane (7) déformable se trouvant entre l'excentrique (6) et le carter de pompe (3), délimitant conjointement avec le carter de pompe (3) un trajet de refoulement (8) à partir de l'entrée (4) au moins au nombre de un vers la sortie (5) au moins au nombre de un, et constituant au moins une étanchéité (9) du trajet de refoulement (8), l'étanchéité (9) au moins au nombre de un pouvant coulisser du fait d'un déplacement de l'excentrique (6) pour le refoulement le long du trajet de refoulement (8), et la pompe (2) ayant un entraînement (26) électrique pour le déplacement de l'excentrique (6), le procédé comprenant au moins les étapes suivantes :
a) détermination d'une quantité de dosage de liquide demandée ;
b) activation de l'entraînement (26) électrique de la pompe (2) au moins au nombre de un pour déplacer l'étanchéité (9) au moins au nombre de un pour le refoulement du liquide avec une direction de refoulement (27) à partir de l'entrée (4) vers la sortie (5) par le fait qu'une tension de fonctionnement (10) est appliquée à l'entraînement (26) électrique ;
c) spécification d'un arrêt de fonctionnement de la pompe (2) au moins au nombre de un quand la quantité de liquide refoulée correspond à la quantité de dosage demandée ;
d) arrêt du déplacement de l'excentrique (6) ;
e) conservation d'une tension de maintien (35) sur l'entraînement (26) électrique, un couple de maintien (38) étant exercé sur l'excentrique (6) à l'aide de la tension de maintien (25), et un déplacement de l'excentrique (6) à l'inverse de la direction de refoulement (27) étant empêché.

2. Procédé selon la revendication 1, un couple de frottement (13) agissant pendant l'étape e), qui soutient le couple de maintien (38).

3. Procédé selon l'une des revendications précédentes, la tension de maintien (35) étant choisie de telle sorte que le couple de maintien (38) se situe entre un couple de rotation maximal et un couple de rotation minimale qui peut être exercé sur l'excentrique (6) par le liquide du fait d'une différence de pression entre la sortie (5) au moins au nombre de un et l'entrée (4) au moins au nombre de un.

4. Procédé selon l'une des revendications précédentes, l'entraînement (26) électrique de la pompe (2) ayant une puissance absorbée inférieure à 15 watts quand la tension de maintien (35) est présente sur l'entraînement (26) électrique.

5. Procédé selon l'une des revendications précédentes, la tension de maintien (35) étant produite à l'aide d'une modulation de largeur d'impulsion (15).

6. Procédé selon l'une des revendications précédentes, la position (34) de l'excentrique (6) par rapport au carter de pompe (3) avant l'étape e) étant identifiée, et un couple de rotation possible maximal qui peut être exercé par le liquide sur l'excentrique (6) étant déterminé à l'aide de la position (34), et la tension de maintien (35) étant spécifiée en fonction de ce couple de rotation possible maximal.

7. Véhicule automobile (17), présentant au moins un moteur à combustion interne (18), un dispositif de traitement des gaz d'échappement (16) pour l'épuration des gaz d'échappement du moteur à combustion interne (18) et un dispositif (1) pour le refoulement d'un liquide vers le dispositif de traitement des gaz d'échappement (18), le dispositif (1) étant aménagé pour être mis en fonctionnement selon un procédé selon l'une des revendications précédentes, le liquide étant une solution urée-eau.
